Europäisches Patentamt

European Patent Office

Office européen des brevets

(19)

(11) Veröffentlichungsnummer: **0 048 033**
A2

# (12) EUROPÄISCHE PATENTANMELDUNG

(21) Anmeldenummer: 81107378.2

(22) Anmeldetag: 17.09.81

(51) Int. Cl.³: **A 62 B 35/00**
**B 60 R 21/10**

(30) Priorität: 17.09.80 DE 3035116

(43) Veröffentlichungstag der Anmeldung:
24.03.82 Patentblatt 82/12

(84) Benannte Vertragsstaaten:
AT BE CH FR GB IT LI LU NL SE

(71) Anmelder: Mangold, Anton
Amselstrasse 4
D-8100 Garmisch-Partenkirchen(DE)

(72) Erfinder: Mangold, Anton
Amselstrasse 4
D-8100 Garmisch-Partenkirchen(DE)

(74) Vertreter: Lorenz, Eduard et al,
Widenmayerstrasse 23
D-8000 München 22(DE)

(54) Sicherheitsgurt.

(57) Ein Sicherheitsgurt weist ein Gurtschloß und eine Gurtzunge auf. Um auch bei nicht erreichbarem Öffnungsverschluß im Falle eines Unfalles eine Öffnung des Verschlusses
zu ermöglichen, ist eine Reißleine (2) derart an dem Gurtschloß (5) befestigt, daß durch ihre Betätigung das Gurtschloß (5) geöffnet werden kann.

./...

EP 0 048 033 A2

Croydon Printing Company Ltd.

Fig. 1

Anton Mangold, Amselstraße 4, 8100 Garmisch-Partenkirchen

_____

Sicherheitsgurt

Die Erfindung betrifft einen Sicherheitsgurt mit Gurtschloß und
Gurtzunge.

Es sind Sicherheitsgurte mit den verschiedensten Einrastschlössern
bekannt, die die Insassen eines Fahrzeuges bei einem Aufprall gegen
Verletzungen schützen sollen. Nachteilig bei allen Gurten ist jedoch, daß bei einem nicht zugänglichen Gurtschloß für einen brennenden oder bewußtlosen Insassen erschwerte Rettungsmöglichkeiten
bestehen. Ferner ist ein Sicherheitsgurt bekannt, welcher sich
nach einem Aufprall automatisch nach ca. 5 Sekunden lösen soll.
Hierbei besteht jedoch die Gefahr, daß bei einer Beschädigung
der Automatik die gleichen Probleme wie bei den anderen Sicherheitsgurten auftreten.

Der Erfindung liegt die Aufgabe zugrunde, einen Sicherheitsgurt
der in Rede stehenden Art derart zu konstruieren, daß auch bei
nicht erreichbarem Öffnungsverschluß im Falle eines Unfalles der
Verschluß geöffnet werden kann.

Erfindungsgemäß wird diese Aufgabe dadurch gelöst, daß eine Reißleine vorgesehen ist, die derart an dem Gurtschloß befestigt ist,
daß durch ihre Betätigung das Gurtschloß geöffnet werden kann.

Der mit der Erfindung erzielbare Vorteil besteht darin, daß der
Sicherheitsgurt auch dann von den Insassen oder von Rettern rasch
und einfach geöffnet werden kann, wenn der Öffnungsverschluß nicht
erreichbar ist. Dies ist besonders wichtig bei brennenden Autos
und bei in verunglückten Fahrzeugen verletzten Personen, die
schnell versorgt werden müssen und geeignetes Werkzeug zum Zerschneiden des Gurtes nicht zur Hand ist.

- 2 -

0048033

Eine einfache Führung der Reißleine ist dann möglich, wenn der Gurt mit dem Gurtschloß verbunden ist. Vorteilhaft ist dabei dann die Reißleine parallel zum Gurt angeordnet. Es ist weiterhin vorteilhaft, die Reißleine unter Zug zu halten.

Ist dagegen der Gurt mit der Gurtzunge verbunden, weist letztere zusätzlich ein mit der Reißleine betätigbares Rückholelement auf, das nach dem Einrasten der Gurtzunge in das Gurtschloß mit dem Preß lösbar verbunden ist.

Die Erfindung wird anhand der Beispiele der Zeichnung näher erläutert. In der Zeichnung zeigt:

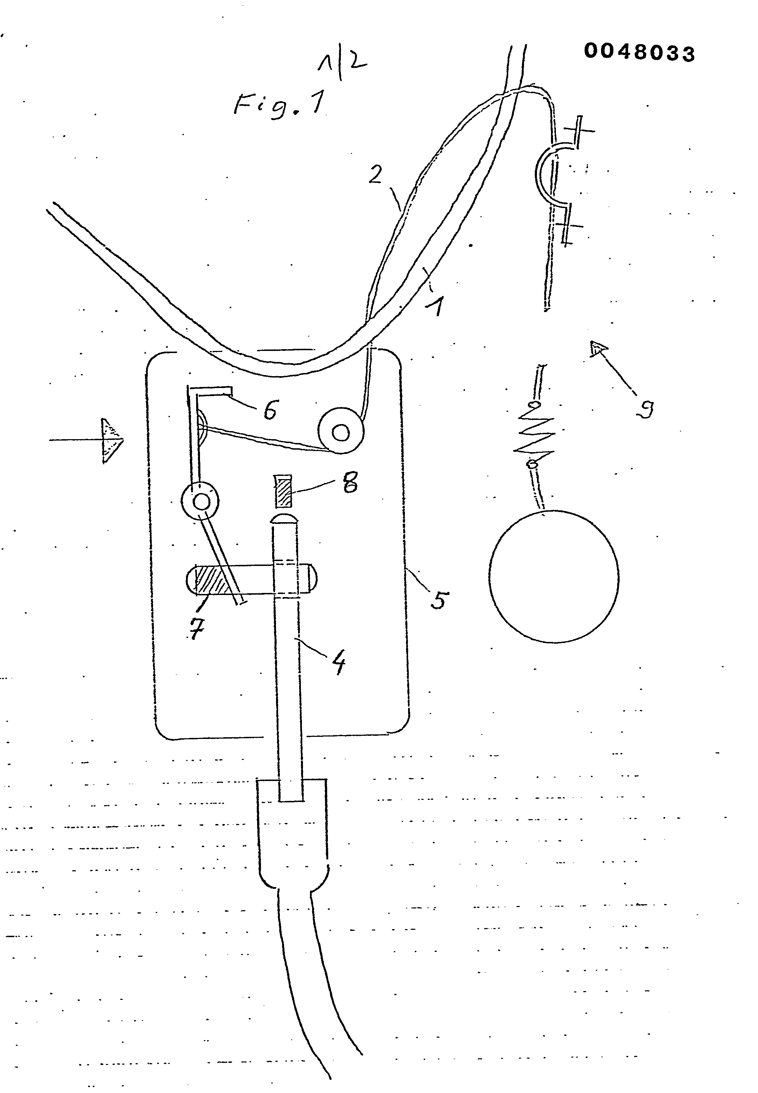

Fig. 1    schematisch die Befestigung am Gurtschloß und Führung der Reißleine, wenn der Gurt mit dem Gurtschloß verbunden ist,

Fig. 2    schematisch die in das Gurtschloß eingerastete Gurtzunge mit einem über die Reißleine betätigbares Rückholelement und

Fig. 3    eine vergrößerte Darstellung des Rückholelementes.

Bei der einen Ausführungsvariante der Erfindung ist das Gurtschloß 5 an dem Gurt 1 befestigt. Eine Reißleine 2 ist an einen Preß 6 des Gurtschlosses derart befestigt, daß bei Betätigung der Reißleine ein Stift 7, der durch eine Aussparung der vorher gegen die Kraft einer Feder 8 eingerasteten Gurtzunge 4 greift, aus der Aussparung herausgedrückt und die Verbindung zwischen Gurtschloß und Gurtzunge gelöst wird. Die Reißleine 1 ist parallel zum Gurt 1 geführt und mittels einer geeigneten Vorrichtung 9 unter Zug gehalten. Sie kann, wie auch der Gurt, bei Nichtbenutzung des Gurtes aufgerollt werden.

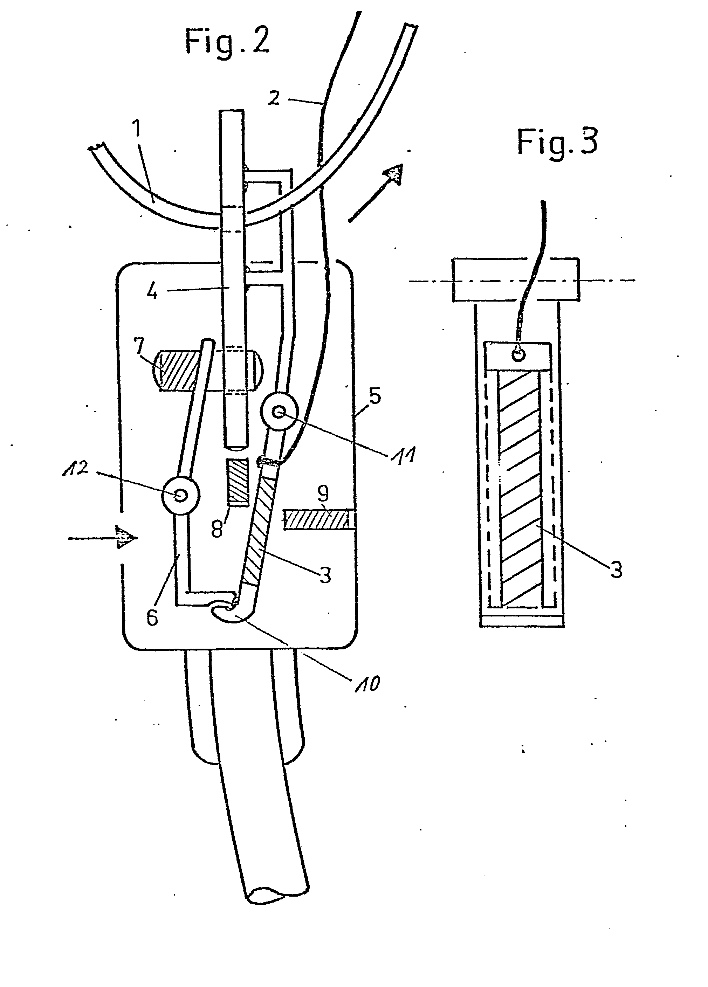

Bei der in Fig. 2 dargestellten Ausführungsform ist die Gurtzunge 4 mit dem Gurt 1 verbunden. Die Reißleine 2 ist mit einem Rückholelement 3 verbunden, das an der Gurtzunge angeordnet ist. Beim Einführen der Gurtzunge 4 in das Gurtschloß 5 wird das

BAD ORIGINAL

-3-

Rückholelement 3 mittels einer im Gurtschloß 5 angeordnete
Feder 9 mit dem Preß 6 in Verbindung gebracht. Bei Betätigung
der Reißleine wird gegen die Kraft einer im Rückholelement 3
angeordnete Feder das hakenförmige Endstück 1o des Rückholelementes in Richtung des Schwenkpunktes 11 des Rückholelementes
gezogen. Dabei wird gleichzeitig der Preß 6 um seinen Drehpunkt 12
verschwenkt und der Stift 7 aus der Ausnehmung der Gurtzunge
herausgedrückt. Hierdurch wird die Verbindung zwischen Schloß
und Zunge gelöst. Wird der Verschwenkwinkel von Rückholelement
und Preß um einenbestimmten Wert überschritten, wird die Verbindung zwischen diesen beiden gelöst und die Gurtzunge kann
aus dem Gurtschloß herausgezogen werden.

0048033

PATENTANSPRÜCHE

1. Sicherheitsgurt mit Gurtschloß und Gurtzunge, dadurch gekennzeichnet, daß eine Reißleine (2) vorgesehen ist, die derart an dem Gurtschloß (5) befestigt ist, daß durch ihre Betätigung das Gurtschloß (5) geöffnet werden kann.

2. Sicherheitsgurt nach Anspruch 1, dadurch gekennzeichnet, daß das Gurtschloß (5) mit dem Gurt (1) verbunden ist.

3. Sicherheitsgurt nach Anspruch 1 oder 2, dadurch gekennzeichnet, daß die Reißleine (2) parallel zum Gurt (1) angeordnet ist.

4. Sicherheitsgurt nach einem der Ansprüche 1 bis 3, dadurch gekennzeichnet, daß die Reißleine (2) unter Zug gehalten wird.

5. Sicherheitsgurt nach Anspruch 1, wobei die Gurtzunge mit dem Sicherheitsgurt verbunden ist, dadurch gekennzeichnet, daß an der Gurtzunge (4) ein durch die Reißleine (2) betätigbares Rückholelement (3) angeordnet ist, das nach dem Einrasten der Gurtzunge (4) in dem Gurtschloß (5) mit dem Preß (6) lösbar verbunden ist.

0048033

Fig.1

0048033

# Fig.2

# Fig.3